# EUROPÄISCHE PATENTSCHRIFT

(11) **EP 0 864 183 B1**
(45) Veröffentlichungstag und Bekanntmachung des Hinweises auf die Patenterteilung: **08.11.2000**
(21) Anmeldenummer: 96941615.5
(22) Anmeldetag: 28.11.1996
(51) Int. Cl.: H01M 8/10, C25B 9/00, H01M 4/96

(54) **GASDIFFUSIONSELEKTRODE FÜR POLYMERELEKTROLYTMEMBRAN-BRENNSTOFFZELLEN**
GAS DIFFUSION ELECTRODE FOR POLYMER ELECTROLYTE MEMBRANE FUEL CELLS
ELECTRODE DE DIFFUSION GAZEUSE POUR PILES A COMBUSTIBLE AVEC MEMBRANE EN ELECTROLYTE POLYMERIQUE

(30) Priorität: 28.11.1995 DE 19544323
(43) Veröffentlichungstag der Anmeldung: 16.09.1998
(73) Patentinhaber: PROTON MOTOR FUEL CELL GMBH, 82319 Starnberg (DE)
(72) Erfinder: KOSCHANY, Arthur, D-82343 Pöcking (DE); LUCAS, Christian, D-82152 Planegg (DE); SCHWESINGER, Thomas, D-94356 Kirchroth (DE)
(74) Vertreter: Klunker . Schmitt-Nilson . Hirsch
(86) Internationale Anmeldenummer: EP9605276
(87) Internationale Veröffentlichungsnummer: WO9720359

(56) Entgegenhaltungen:
- EP-A- 0 176 831
- EP-A- 0 298 690
- EP-A- 0 560 295
- EP-A- 0 577 291
- EP-A- 0 606 051
- EP-A- 0 687 023
- FR-A- 2 258 007
- US-A- 4 804 592
- US-A- 5 171 644
- US-A- 5 399 184
- US-A- 5 521 020

## Beschreibung

Die Erfindung betrifft Polymerelektrolytmembran-Brennstoffzellen, insbesondere Gasdiffusionselektroden für Brennstoffzellen oder Elektrolysezellen, ein Verfahren zur Herstellung einer Gasdiffusionselektrode für Brennstoffzellen oder Elektrolysezellen, ein Verfahren zur Beschichtung von Gasdiffusionselektroden mit einer katalytisch aktiven Schicht und ein Verfahren zur Herstellung einer Membran-Elektrodeneinheit.

In Polymerelektrolytmembran-Brennstoffzellen wird eine Gasdiffusionsmatte als Elektrode zwischen Polymerelektrolytmembran und Stromsammlern, z. B. bipolaren Platten, verwendet. Sie hat die Funktion, den in der Membrane erzeugten Strom abzuleiten und muß die Reaktionsgase zur katalytischen Schicht durchdiffundieren lassen. Außerdem muß die Gasdiffusionselektrode zumindest in der der Membrane zugewandten Schicht wasserabweisend sein, um zu verhindern, daß bei der Reaktion gebildetes Wasser die Poren der Gasdiffusionselektrode flutet. Für viele Anwendungen, beispielsweise in der Raumfahrt, ist es zudem wichtig, daß die zum Aufbau der Zellstapel verwendeten Materialien leicht und platzsparend sind. Stets von Interesse ist eine möglichst kostengünstige Herstellung der Materialien.

Bisher werden für derartige Gasdiffusionselektroden typischerweise Matten aus graphitisiertem Gewebe verwendet, die ab einer Dichte von 116 g/m² erhältlich sind. Die Gasdiffusionsmatten aus graphitisiertem Gewebe lassen Sauerstoff, besonders 0₂ aus der Luft unter niedrigem Druck, oft nicht ausreichend gut diffundieren und sind außerdem relativ schwer. Bei ihrer Herstellung werden hohe Temperaturen benötigt, was zu einem entsprechend hohen Energieverbrauch und hohen Preisen führt.

EP-A-0 577 291 offenbart poröse Elektroden, die zur Verwendung in einer Membran-Elektrodeneinheit für Festpolymer-Brennstoffzellen geeignet sind. Die Elektroden werden hergestellt aus Kohlenstoffpulver, teils mit, teils ohne Katalysatorbeladung, protonenleitendem Polymer und hydrophobem Polymer. Das Gemisch wird als gleichmäßige Schicht auf Kohlenstoffpapier oder Kohlenstofftuch als Trägersubstrat aufgebracht. Eine homogene Imprägnierung des Substrats findet nicht statt.

EP-A-0 298 690 offenbart Elektroden, die in Kombination mit flüssigen Elektrolyten verwendet werden. Die Elektroden bestehen aus mindestens zwei Schichten, einer wasserundurchlässigen Schicht und einer Kohlenstoff enthaltenden Schicht. Die Kohlenstoff enthaltende Schicht kann ein Kohlefaservlies sein, das mit einem Gemisch aus Kohlenstoffteilchen und Polymer imprägniert ist. Die Elektroden werden nicht bei mindestens 300°C gesintert und sind hydrophil.

Aufgabe dieser Erfindung ist es, eine kostengünstig herstellbare, leichte Gasdiffusionselektrode zur Verfügung zu stellen, die Sauerstoff, insbesondere aus der Luft unter geringem Überdruck, gut diffundieren läßt und die außerdem die erforderliche hohe elektrische Leitfähigkeit besitzt und wasserabstoßend ist.

Aufgabe der Erfindung ist es ferner, eine Polymerelektrolytmembran-Brennstoffzelle mit einer solchen Gasdiffusionselektrode zur Verfügung zu stellen.

Aufgabe der Erfindung ist es außerdem, ein Verfahren zur Herstellung einer derartigen Gasdiffusionselektrode anzugeben.

Aufgabe der Erfindung ist es auch, ein Verfahren zur Beschichtung einer Gasdiffusionselektrode mit einer katalytisch aktiven Schicht bereitzustellen.

Eine weitere Aufgabe der Erfindung ist es, ein Verfahren zur Herstellung einer Membran-Elektrodeneinheit anzugeben.

Diese Aufgaben werden gelöst durch die Gasdiffusionselektrode gemäß Anspruch 1, die Membran-Elektrodeneinheit gemäß Anspruch 8, die Polymerelektrolytmembran-Brennstoffzelle gemäß Anspruch 9, das Verfahren zur Herstellung einer Gasdiffusionselektrode gemäß Anspruch 10, das Verfahren zur Beschichtung einer Gasdiffusionselektrode gemäß Anspruch 16 und das Verfahren zur Herstellung einer Membran-Elektrodeneinheit gemäß Anspruch 20. Vorteilhafte Weiterbildungen der Erfindung sind in den entsprechenden Unteransprüchen angegeben.

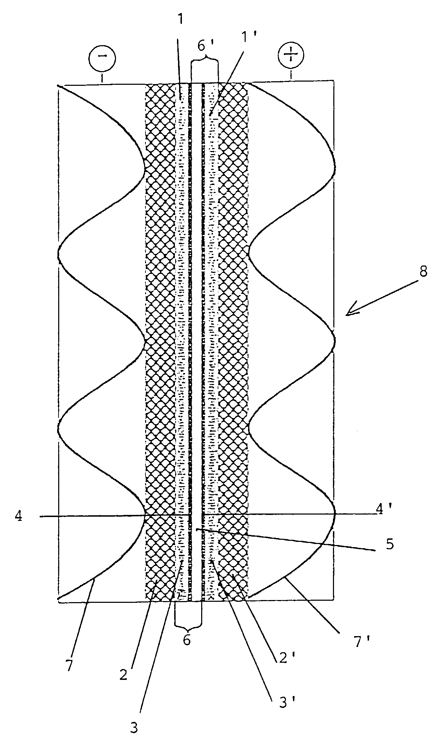

Abbildung 1 zeigt eine erfindungsgemäße Polymerelektrolytmembran-Brennstoffzelle.

Die Gasdiffusionselektroden gemäß der Erfindung eignen sich für Brennstoffzellen, insbesondere Polymerelektrolytmembran-Brennstoffzellen, und Polymerelektolytmembran-Elektrolysezellen. In Polymerelektrolyt-Brennstoffzellen können die erfindungsgemäßen Gasdiffusionselektroden sowohl als Anode als auch als Kathode verwendet werden, in Elektrolysezellen sind sie ausschließlich an der Wasserstoff-Seite einsetzbar, da an der Sauerstoff-Seite Oxidation stattfinden würde. Mit besonderem Vorteil können die erfindungsgemäßen Gasdiffusionselektroden in Polymerelektrolytmembran-Brennstoffzellen verwendet werden, die als Brenngas Wasserstoff und als Oxidationsmittel Luft verwenden und die bei niedrigem Druck von weniger als 0,5 bar, bevorzugt weniger als 0,1 bar betrieben werden. Insbesondere bevorzugt sind Betriebsdruckdifferenzen in der Größenordnung von etwa 10 mbar.

Als Ausgangsmaterial für die erfindungsgemäßen Gasdiffusionselektroden wird ein sehr leichtes Kohlefaservlies aus carbonisierten Fasern mit einer flächenspezifischen Masse von bis zu 60 g/m² verwendet. Besonders gut geeignet sind carbonisierte Kohlefaservliese mit flächenspezifischen Massen bis zu tpyischerweise 30g/m². Carbonisierte Kohlefasern können sehr viel billiger hergestellt werden als graphitisierte Fasern, denn zu ihrer Herstellung werden wesentlich geringere Temperaturen benötigt.

Zur Herstellung einer erfindungsgemäßen Gasdiffusionselektrode wird zunächst aus Ruß und mindestens einer Flüssigkeit eine Suspension hergestellt, z. B. eine Suspension aus Vulcan XC 72 und Wasser. Zur Herabsetzung der Oberflächenspannung können Zusätze wie z. B. Isopropanol beigegeben werden. Derartige Zusätze verbessern die Herstellbarkeit der Suspension, da sie eine bessere Benetzbarkeit des Rußes und damit eine bessere Mischbarkeit von Ruß und Suspensionsflüssigkeit bewirken. Diese Suspension wird intensiv gemischt mit einer Suspension aus PTFE in mindestens einer Flüssigkeit, vorzugsweise Wasser. PTFE und Ruß werden bevorzugt im Massenverhältnis 1:10 bis 1:1 eingesetzt. Typisch sind 25 bis 40 % PTFE bezogen auf die eingewogene Menge an Ruß. Das Kohlefaservlies wird mit dieser Mischung getränkt bzw. die Mischung wird auf das Kohlefaservlies gleichmäßig aufgetragen, so daß das Kohlefaservlies im wesentlichen homogen imprägniert wird. Anschließend wird das Kohlefaservlies getrocknet, wobei sich die zur Trocknung erforderlichen Temperaturen nach der Art der verwendeten Flüssigkeiten richten. In der Regel ist ein Trocknen bei höheren Temperaturen als Raumtemperatur vorteilhaft, z. B. etwa 110°C oder darüber bei vorwiegend wäßrigen Suspensionen. Das Imprägnieren und Trocknen des Kohlefaservlieses kann ein- oder mehrmals wiederholt werden. Das so imprägnierte Kohlefaservlies wird schließlich bei einer Temperatur von mindestens 300°C gesintert. Bevorzugt wird etwa eine halbe Stunde lang bei Temperaturen von etwa 300°C bis 400°C gesintert.

Die so erhaltene Elektrode aus Kohlefaservlies ist besonders homogen, porös und leicht und dennoch mechanisch sehr stabil. Sie läßt Sauerstoff besser diffundieren als die bisher verwendeten graphitisierten Gewebe und trägt wegen ihres im Vergleich zu graphitisierten Geweben geringeren Gewichts dazu bei, das Gesamtgewicht der Brennstoffzellen zu verringern. Ein wichtiger Faktor sind auch die gegenüber graphitisierten Geweben erzielten Einsparungen beim Herstellungsverfahren der erfindungsgemäßen Gasdiffusionselektroden: Bei der Herstellung der Kohlefaservliese sind niedrigere Temperaturen erforderlich als bei graphitisierten Geweben, was zu Energie- und damit Kostenersparnissen führt. Wegen ihres Anteils an Ruß und Polytetrafluorethylen besitzen die Gasdiffusionselektroden gemäß der Erfindung die erforderliche hohe Leitfähigkeit für elektrischen Strom und sind wasserabstoßend.

Die wie vorstehend beschrieben hergestellte Gasdiffusionselektrode kann nun in eine Polymerelektrolytmembran-Brennstoffzelle eingesetzt werden. Da die Elektrode keine katalytisch aktive Schicht enthält, muß eine mit Katalysator beschichtete Membran verwendet werden. Alternativ kann jedoch auch die erfindungsgemäße Gasdiffusionselektrode mit Katalysator beschichtet werden. Die katalytische Schicht muß gasdurchlässig sein und elektrische Leitfähigkeit sowie H⁺-Ionenleitfähigkeit besitzen und selbstverständlich die gewünschte Reaktion katalysieren. Diese Eigenschaften erhält man bei einer sehr dünnen Schicht, die ionenleitfähiges Material, z. B. Nafion®-Polymer und Edelmetallkatalysator gemischt enthält. Als Edelmetallkatalysator wird bevorzugt Platin auf Kohlenstoffträger verwendet. Eine sehr günstige Platinbeladung ist etwa 0,2 mg/cm² der Gasdiffusionselektrode. Das Masseverhältnis von Platin auf Kohlenstoffträger : Nafion® liegt typischerweise im Bereich von 2:1 bis 4:1. Der Kohlenstoffträger ist elektrisch leitfähig und porös, so daß eine ausreichende Leitfähigkeit und Gasdurchlässigkeit der katalytischen Schicht gewährleistet ist. Das Polymer dient gleichzeitig als Bindemittel für die Schicht. Die geringe Schichtdicke von größenordnungsmäßig etwa 20 µm garantiert kurze Transportwege für Elektronen, H⁺-Ionen und Gas.

Erfindungsgemäß wird eine Gasdiffusionselektrode folgendermaßen mit einer katalytisch aktiven Schicht beschichtet: Edelmetallkatalysator auf Kohlenstoffträger, z. B. 20 % Pt, 80 % C, wird mit gelöstem oder suspendiertem ionenleitendem Polymer intensiv gemischt. Als ionenleitendes Polymer kann z. B. Nafion®, gelöst in Alkoholen und Wasser, verwendet werden. Die Suspension kann ggf. mit einer geeigneten Flüssigkeit, z. B. Wasser, verdünnt werden. Die Suspension aus Katalysator und Polymer wird auf eine Oberfläche der Gasdiffusionselektrode aufgebracht und die aufgebrachte Schicht dann getrocknet. Meist ist es vorteilhaft, vor dem Aufbringen der Suspension einen Teil der Alkohole, eventuell bei leicht erhöhter Temperatur, zu verdunsten. Die Verdunstung eines Teils der Alkohole dient dazu, die Oberflächenspannung der Suspension zu erhöhen, denn bei zu geringer Oberflächenspannung besteht die Gefahr, daß das imprägnierte Kohlefaservlies die Suspension aufsaugt. Ziel ist es jedoch, eine dünne Katalysatorschicht an der Oberfläche des imprägnierten Kohlefaservlieses zu erhalten.

Die katalytisch aktive Schicht kann z. B. durch Aufsprühen, durch Siebdruck oder durch Aufpinseln aufgebracht werden. Eine besonders gute Haftung der katalytisch aktiven Schicht erhält man, wenn man die Schritte des Aufbringens und Trocknens ein- oder mehrmals wiederholt. Auf diese Weise kann auch die Bildung von Rissen in der Schicht zuverlässig vermieden werden. Die katalytisch aktive Schicht muß nicht notwendigerweise über ihre ganze Dicke homogen sein, vielmehr ist es meist günstiger, wenn ein Konzentrationsgradient an elektrisch und ionenleitendem Material senkrecht zur Schicht besteht. Wenn man die Schicht in mehreren Schritten aufbringt, ist es durch Wahl der geeigneten Konzentrationen der jeweiligen Suspension an Kohlenstoff und Polymer leicht möglich, Schichten zu erhalten, die am Kohlefaservlies kohlenstoffreich, an der später der Membran zugewandten Seite jedoch reich an Polymer sind. Eine derartige Verteilung an elektronenleitendem Kohlenstoff und ionenleitendem Polymer ist insofern von Vorteil, als sie der unterschiedlichen Konzentration an Elektronen und Ionen in der katalytisch aktiven Schicht angepaßt ist. Betrachtet man beispielsweise die Anode, so wird das aus dem Kohlefaservlies in die katalytisch aktive Schicht übertretende Brenngas auf seinem Weg durch die Schicht hindurch in Richtung Polymerelektrolytmembran in zunehmendem Maße ionisiert, so daß die Konzentration an Ionen und damit der Bedarf an ionenleitendem Material in membrannahen Bereichen der katalytisch aktiven Schicht höher ist als in den an das Kohlefaservlies angrenzenden Bereichen. Die Konzentration an Elektronen und damit der Bedarf an elektronenleitendem Kohlenstoff hingegen ist in den membrannahen Bereichen geringer, da nicht die Gesamtmenge der freiwerdenden Elektronen diese Bereiche passiert, sondern lediglich die bei der Ionisierung des in dem jeweiligen Bereich noch vorhandenen neutralen Restgases freiwerdenden Elektronen. Analog wird in der katalytisch aktiven Schicht der Kathode das Oxidationsgas auf seinem Weg durch die Schicht durch Aufnahme von Elektronen in zunehmendem Ausmaß ionisiert, so daß auch hier die Konzentration an Ionen in membrannahen Bereichen höher und die Konzentration an Elektronen geringer ist als in membranabgewandten Bereichen.

Das Verfahren kann bei jeder beliebigen nicht katalysierten Gasdiffusionselektrode angewendet werden.

Die Gasdiffusionselektrode kann durch ein leitendes Gitternetz verstärkt werden. Für das Gitternetz eignet sich besonders ein Nickel-Quadratmaschengewebe mit einer Maschenweite von 0,4 bis 0,8 mm und einer Drahtstärke von 0,12 bis 0,28 mm. Nickel ist insofern ein günstiges Material, als es für die Verhältnisse in der Brennstoffzelle chemisch inert ist und einen wesentlich kleineren Übergangswiderstand zu imprägniertem Kohlefaservlies aufweist als z. B. Edelstahl. Das Gitternetz wird bei der Montage der Brennstoffzelle auf der der Membran abgewandten Seite der Gasdiffusionselektrode eingebaut. Seine Aufgabe ist es, eine sehr gute Stromableitung von der Gasdiffusionselektrode sicherzustellen und gleichzeitig die Elektrode gleichmäßig an die Membran anzupressen.

Bei Bedarf können auch mehrere Kohlefaservliese nach dem Imprägnieren und Sintern zu einer Gasdiffusionselektrode kombiniert werden. Durch die Verwendung mehrerer imprägnierter Kohlefaservliese übereinander wird die Gefahr verringert, daß sich das Gitternetz und/oder Teile der Stromsammler, z. B. der bipolaren Platten, bis zur Membran hin durchdrücken und diese beschädigen. Typischerweise werden zwei bis drei imprägnierte Kohlefaservliese miteinander kombiniert. Die Verwendung von mehr als vier Kohlefaservliesen übereinander kann zu einer nicht mehr ausreichenden Gasdiffusion führen, die sich in der U-I-Kennlinie bemerkbar macht. Zur Erzielung einer guten Haftung der imprägnierten Kohlefaservliese aneinander kann die gewünschte Anzahl imprägnierter und gesinterter Kohlefaservliese gepreßt werden, wobei bevorzugt Drücke von bis zu 500 bar und Temperaturen bis 400°C angewendet werden. Typische Bedingungen sind ein Druck von ca. 200 bar und eine Temperatur von ca. 140°C. Das Beschichten einer Oberfläche einer derartigen Gasdiffusionselektrode mit Katalysator führt man am besten nach dem Pressen durch.

Die erfindungsgemäße Gasdiffusionselektrode kann mit einer Polymerelektrolytmembran zu einer Membran-Elektrodeneinheit kombiniert werden. Je nach dem, ob die Gasdiffusionselektrode eine katalytisch aktive Schicht trägt oder nicht, muß eine Membran ohne oder mit katalytisch aktiver Schicht verwendet werden. Zur Herstellung einer Membran-Elektrodeneinheit wird eine Gasdiffusionselektrode, die aus einem oder mehreren imprägnierten Kohlefaservliesen aufgebaut sein kann, an einer Seite einer in ihrer H⁺-Form vorliegenden Polymerelektrolytmembran angeordnet und anschließend bei Drücken bis zu 500 bar und Temperaturen bis zu 250°C aufgepreßt. Typische Bedingungen sind ein Druck von ca. 200 bar und eine Temperatur von ca. 125°C. Wenn die Gasdiffusionselektrode die katalytisch aktive Schicht enthält, muß sie dergestalt auf die Membran aufgepreßt werden, daß die katalytisch aktive Schicht in Kontakt mit der Membran steht. Mit beiden Seiten der Membran kann auf diese Weise verfahren werden, so daß sowohl Anode als auch Kathode auf diese Weise hergestellt werden können. Durch das Aufpressen wird der elektrische Kontakt zwischen der Katalysatorschicht auf der Membran und dem Kohlefaservlies bzw. zwischen der Katalysatorschicht auf dem Kohlefaservlies und der Membran gegenüber einem losen Zusammenspannen deutlich verbessert. Vor dem Einbau der Membran-Elektrodeneinheit in eine Polymerelektrolytmembran-Brennstoffzelle können die Gasdiffusionselektroden auf der der Membran abgewandten Seite durch Beilegung eines Gitternetzes verstärkt werden.

Eine besonders bevorzugte Ausführungsform einer Brennstoffzelle mit erfindungsgemäßer Gasdiffusionselektrode ist in Abbildung 1 gezeigt. Anode 1 und Kathode 1' werden von den imprägnierten Kohlefaservliesen 3 und 3' gebildet. Anode 1 und Kathode 1' tragen an ihren der Polymerelektrolytmembran 5 zugewandten Seiten jeweils eine Katalysatorschicht 4 bzw. 4'. Anode 1 und Kathode 1' bilden zusammen mit der Polymerelektrolytmembran 5 die Membran-Elektrodeneinheit 6 bzw. 6'. An ihren von der Membran abgewandten Seiten sind Anode 1 und Kathode 1' durch leitende Gitternetze 2 bzw. 2' verstärkt. Die bipolaren Platten 7 und 7' begrenzen die Zelle anoden- bzw. kathodenseitig.

### Beispiel für die Herstellung einer erfindungsgemäßen Gasdiffusionselektrode:

45 g Ruß (Vulcan XC 72) werden in 450 ml Wasser und 495 ml Isopropanol suspendiert. Diese Suspension wird intensiv gemischt mit 32,17 g einer PTFE-Suspension (60 % Hostaflon®-Fasern in wäßriger Suspension). Mit der resultierenden Mischung wird ein carbonisiertes Kohlefaservlies 30 g/m² gleichmäßig bestrichen und das Vlies anschließend bei ca. 70°C getrocknet. Das Bestreichen und Trocknen wird zweimal wiederholt. Nach dem letzten Trocknen wird das imprägnierte Kohlefaservlies ca. 30 Minuten lang bei 400°C gesintert. Man erhält ein gleichmäßig mit Vulcan XC 72 und Hostaflon® imprägniertes Kohlefaservlies.

### Beispiel für die Beschichtung einer Gasdiffusionselektrode mit einer katalytisch aktiven Schicht:

0,6 g Edelmetallkatalysator auf Kohlenstoffträger (20 % PT, 80 % C) werden mit 4,0 g einer 5 %igen Nafion®-Lösung (Nafion® gelöst in niederen aliphatischen Alkoholen und Wasser) und 10,0 g Wasser intensiv gemischt. Danach werden 2 g der enthaltenen Alkohole bei 50°C abgedampft, um die Oberflächenspannung der Suspension zu erhöhen. Die Suspension wird nun auf ein imprägniertes Kohlefaservlies aufgesprüht und anschließend bei 80°C getrocknet. Das Aufsprühen und Trocknen wird zweimal wiederholt. Es resultiert eine mit Katalysator beschichtete Gasdiffusionselektrode.

Die so erzeugte Gasdiffusionselektrode läßt Sauerstoff besser diffundieren als graphitisiertes Gewebe, besitzt durch ihren Rußgehalt eine hohe elektrische Leitfähigkeit und ist durch ihren PTFE-Gehalt wasserabstoßend. Außerdem ist sie kostengünstiger herstellbar, sehr homogen und besitzt eine geringere Masse/Flächeneinheit als die bisher bekannten graphitisierten Gewebe mit Ruß.

## Patentansprüche

1. Polymerelektrolytmembranbrennstoffzellen-Gasdiffusionselektrode (1, 1'), die elektrisch leitfähig, hydrophob und gasdurchlässig ist,
**dadurch gekennzeichnet,**
daß sie mindestens ein aus carbonisierten Fasern bestehendes Kohlefaservlies (3, 3') mit einer flächenspezifischen Masse von bis zu 60 g/m² enthält, das mit Ruß und Polytetrafluorethylen im wesentlichen homogen imprägniert und im imprägnierten Zustand bei einer Temperatur von mindestens 300°C gesintert ist.

2. Polymerelektrolytmembranbrennstoffzellen-Gasdiffusionselektrode (1,1') nach Anspruch 1,
**dadurch gekennzeichnet,**
daß sie ein bis vier Kohlefaservliese enthält.

3. Polymerelektrolytmembranbrennstoffzellen-Gasdiffusionselektrode (1,1') nach Anspruch 1 oder 2,
**dadurch gekennzeichnet,**
daß sie eine katalytisch aktive Schicht (4,4') aufweist.

4. Polymerelektrolytmembranbrennstoffzellen-Gasdiffusionselektrode (1,1') nach Anspruch 3,
**dadurch gekennzeichnet,**
daß die katalytisch aktive Schicht (4,4') elektrisch leitendes Material und ionenleitendes Material aufweist, wobei die Konzentration an elektrisch leitendem Material senkrecht zur Schicht mit zunehmender Entfernung vom Kohlefaservlies abnimmt und die Konzentration an ionenleitendem Material zunimmt.

5. Polymerelektrolytmembranbrennstoffzellen-Gasdiffusionselektrode (1,1') nach Anspruch 3 oder 4,
**dadurch gekennzeichnet,**
daß die katalytisch aktive Schicht (4,4') mindestens einen Edelmetallkatalysator auf Kohlenstoffträger und mindestens ein ionenleitendes Polymer aufweist.

6. Polymerelektrolytmembranbrennstoffzellen-Gasdiffusionselektrode (1,1') nach einem der Ansprüche 1 bis 5,
**dadurch gekennzeichnet,**
daß sie durch ein leitendes Gitternetz (2,2') verstärkt ist.

7. Polymerelektrolytmembranbrennstoffzellen-Gasdiffusionselektrode (1,1') nach Anspruch 6,
**dadurch gekennzeichnet,**
daß das Gitternetz (2,2') ein Nickel-Quadratmaschengewebe mit einer Maschenweite von 0,4 bis 0,8 mm und einer Drahtstärke von 0,12 bis 0,28 mm ist.

8. Membran-Elektrodeneinheit (6; 6') aufweisend eine Polymerelektrolytmembran (5), mindestens eine Gasdiffusionselektrode (1; 1') und eine dazwischen vorgesehene katalytisch aktive Schicht (4; 4'),
**dadurch gekennzeichnet,**
daß die Gasdiffusionselektrode mindestens eine Polymerelektrolytmembranbrennstoffzellen-Gasdiffusionselektrode (1; 1') gemäß einem der Ansprüche 1 bis 7 ist.

9. Polymerelektrolytmembranbrennstoffzelle (8) mit einer Anode (1), einer Kathode (1'), einer zwischen Anode und Kathode angeordneten Polymerelektrolytmembran (5),
**dadurch gekennzeichnet,**
daß mindestens eine der Elektroden (1,1') als Polymerelektrolytmembranbrennstoffzellen-Gasdiffusionselektrode gemäß einem der Ansprüche 1 bis 7 ausgebildet ist.

10. Verfahren zur Herstellung einer Polymerelektrolytmembranbrennstoffzellen-Gasdiffusionselektrode (1,1') für eine Polymerelektrolytmembranbrennstoffzelle (8), folgende Schritte aufweisend:
a) Herstellen einer Suspension aus Ruß und mindestens einer Flüssigkeit,
b) Bereitstellen einer Suspension aus Polytetrafluorethylen und mindestens einer Flüssigkeit,
c) intensiv Mischen der in Schritt a) und Schritt b) hergestellten Suspensionen,
d) im wesentlichen homogen Imprägnieren eines carbonisierten Kohlefaservlieses mit einer flächenspezifischen Masse von bis zu 60 g/m² mit der in Schritt c) hergestellten Mischung,
e) Trocknen des imprägnierten Kohlefaservlieses,
f) Sintern des imprägnierten Kohlefaservlieses bei einer Temperatur von mindestens 300°C.

11. Verfahren nach Anspruch 10,
**dadurch gekennzeichnet,**
daß die Schritte d) und e) ein- oder mehrmals wiederholt werden.

12. Verfahren nach Anspruch 10 oder 11,
**dadurch gekennzeichnet,**
daß das mindestens eine gesinterte Kohlefaservlies bei einem Druck von bis zu 500 bar und einer Temperatur bis zu 400°C gepreßt wird.

13. Verfahren nach einem der Ansprüche 10 bis 12,
**dadurch gekennzeichnet,**
daß das Trocknen des imprägnierten Kohlefaservlieses bei einer höheren Temperatur als Raumtemperatur erfolgt.

14. Verfahren nach einem der Ansprüche 10 bis 13,
**dadurch gekennzeichnet,**
daß der Suspension aus Ruß und mindestens einer Flüssigkeit ein Mittel zur Herabsetzung der Oberflächenspannung zugefügt wird.

15. Verfahren nach einem der Ansprüche 10 bis 14,
**dadurch gekennzeichnet,**
daß Polytetrafluorethylen und Ruß im Massenverhältnis 1:10 bis 1:1 eingesetzt werden.

16. Verfahren zur Beschichtung einer Gasdiffusionselektrode (1, 1') an einer Oberfläche mit einer katalytisch aktiven Schicht, wobei das Beschichten folgende Schritte aufweist:
a) intensives Mischen von Edelmetallkatalysator auf Kohlenstoffträger mit gelöstem oder suspendiertem ionenleitendem Polymer,
b) Aufbringen der in Schritt a) hergestellten Suspension auf eine Oberfläche der Gasdiffusionselektrode (1, 1'),
c) Trocknen der aufgebrachten Schicht,
**dadurch gekennzeichnet,**
daß als Gasdiffusionselektrode (1, 1') eine Polymerelektrolytmembranbrennstoffzellen-Gasdiffusionselektrode gemäß Anspruch 1 oder 2 verwendet wird.

17. Verfahren nach Anspruch 16,
**dadurch gekennzeichnet,**
daß vor dem Aufbringen der in Schritt a) hergestellten Suspension ein Teil der Suspensionsflüssigkeit verdunstet wird.

18. Verfahren nach Anspruch 16 oder 17,
**dadurch gekennzeichnet,**
daß die Schritte b) und c) ein- oder mehrmals wiederholt werden.

19. Verfahren nach Anspruch 18,
**dadurch gekennzeichnet,**
daß Suspensionen unterschiedlicher Konzentration an Edelmetallkatalysator auf Kohlenstoffträger und ionenleitendem Polymer verwendet werden.

20. Verfahren zur Herstellung einer Membran-Elektrodeneinheit (6,6'), folgende Schritte aufweisend:
a) Bereitstellen einer Polymerelektrolytmembran (5) in H⁺-Forrn mit oder ohne katalytisch aktive Beschichtung,
b) Anordnen einer Polymerelektrolytmembranbrermstoffzellen-Gasdiffusionselektrode (1,1') gemäß Anspruch 1 oder 2 an einer oder an beiden Seiten der Polymerelektrolytmembran (5), wenn diese katalytisch beschichtet ist oder Anordnen einer Polymerelektrolytmembranbrennstoffzellen-Gasdiffusionselektrode (1,1') gemäß einem der Ansprüche 3 bis 5 an einer oder an beiden Seiten der Polymerelektrolytmembran (5), wenn diese nicht katalytisch beschichtet ist,
c) Pressen der Anordnung aus Gasdiffusionselektrode (1,1') und Membran (5) bei einem Druck von bis zu 500 bar und einer Temperatur von bis zu 250°C.

## Claims

1. A polymer electrolyte membrane fuel cell gas diffusion electrode (1, 1') that is electrically conductive, hydrophobic and gas permeable,
characterized in that it comprises at least one carbon fiber nonwoven fabric (3, 3') consisting of carbonized fibers and having a mass-area ratio of up to 60 g/m², said carbon fiber nonwoven fabric being impregnated with soot and polytetrafluoroethylene in substantially homogenous manner and being sintered, in the impregnated state, at a temperature of at least 300 °C.

2. The polymer electrolyte membrane fuel cell gas diffusion electrode (1, 1') of claim 1,
characterized in that it comprises one to four carbon fiber nonwoven fabrics.

3. The polymer electrolyte membrane fuel cell gas diffusion electrode (1, 1') of claim 1 or 2,
characterized in that it comprises a catalytically active layer (4, 4').

4. The polymer electrolyte membrane fuel cell gas diffusion electrode (1, 1') of claim 3,
characterized in that the catalytically active layer (4, 4') comprises electrically conducting and ion conducting material, the concentration of the electrically conducting material perpendicularly to the layer decreasing with increasing distance from the carbon fiber nonwoven fabric and the concentration of the ion conducting material increasing.

5. The polymer electrolyte membrane fuel cell gas diffusion electrode (1, 1') of claim 3 or 4,
characterized in that the catalytically active layer (4, 4') comprises at least one noble metal catalyst on carbon carrier and at least one ion conducting polymer.

6. The polymer electrolyte membrane fuel cell gas diffusion electrode (1, 1') of any of claims 1 to 5,
characterized in that it is reinforced by a conductive grid (2, 2').

7. The polymer electrolyte membrane fuel cell gas diffusion electrode (1, 1') of claim 6,
characterized in that the grid (2, 2') is a nickel square mesh fabric having a mesh aperture of 0.4 to 0.8 mm and a wire gauge of 0.12 to 0.28 mm.

8. A membrane and electrode unit (6; 6') comprising a polymer electrolyte membrane (5), at least one gas diffusion electrode (1; 1') and a catalytically active layer (4; 4') provided therebetween,
characterized in that the gas diffusion electrode is at least one polymer electrolyte membrane fuel cell gas diffusion electrode (1; 1') according to any of claims 1 to 7.

9. A polymer electrolyte membrane fuel cell (8) comprising an anode (1), a cathode (1'), a polymer electrolyte membrane (5) disposed between anode and cathode,
characterized in that at least one of the electrodes (1, 1') is designed as a polymer electrolyte membrane fuel cell gas diffusion electrode according to any of claims 1 to 7.

10. A method of making a polymer electrolyte membrane fuel cell gas diffusion electrode (1, 1') for a polymer electrolyte membrane fuel cell (8), comprising the following steps:
a) preparing a suspension of soot and at least one liquid,
b) providing a suspension of polytetrafluoroethylene and at least one liquid,
c) intensively mixing the suspensions formed in step a) and step b),
d) impregnating, in substantially homogeneous manner, a carbonized carbon fiber nonwoven fabric having a mass-area ratio of up to 60 g/m² with the mixture produced in step c),
e) drying the impregnated carbon fiber nonwoven fabric,
f) sintering the impregnated carbon fiber nonwoven fabric at a temperature of at least 300 °C.

11. The method of claim 10,
characterized in that steps d) and e) are repeated once or several times.

12. The method of claim 10 or 11,
characterized in that the at least one sintered carbon fiber nonwoven fabric is pressed at a pressure of up to 500 bar and a temperature of up to 400 °C.

13. The method of any of claims 10 to 12,
characterized in that drying of the impregnated carbon fiber nonwoven fabric takes place at a higher temperature than room temperature.

14. The method of any of claims 10 to 13,
characterized in that at least one agent for reducing the surface tension is added to the suspension of soot and at least one liquid.

15. The method of any of claims 10 to 14,
characterized in that polytetrafluoroethylene and soot are used in a mass ratio of 1:10 to 1:1.

16. A method of coating a gas diffusion electrode (1, 1') on a surface thereof with a catalytically active layer,
the coating operation comprising the following steps:
a) intensively mixing noble metal catalyst on carbon carrier with ion conducting polymer in solution or suspension,
b) applying the suspension formed in step a) onto a surface of the polymer electrolyte membrane fuel cell gas diffusion electrode (1, 1'),
c) drying the layer applied,
characterized in that the gas diffusion electrode (1, 1') used is a polymer electrolyte membrane fuel cell gas diffusion electrode according to claim 1 or 2.

17. The method of claim 16,
characterized in that part of the suspension liquid is evaporated prior to application of the suspension made in step a).

18. The method of claim 16 or 17,
characterized in that steps b) and c) are repeated once or several times.

19. The method of claim 18,
characterized in that suspensions of different concentration of noble metal catalyst on carbon carrier and ion conducting polymer are used.

20. A method of making a membrane and electrode unit (6, 6'), comprising the following steps:
a) preparing a polymer electrolyte membrane (5) in H⁺-form with or without a catalytically active coating,
b) disposing a polymer electrolyte membrane fuel cell gas diffusion electrode (1, 1') according to claim 1 or 2 on one or both sides of the polymer electrolyte membrane (5) when the latter is catalytically coated, or
disposing a polymer electrolyte membrane fuel cell gas diffusion electrode (1, 1') according to any of claims 3 to 5 on one or both sides of the polymer electrolyte membrane (5) when the latter is not catalytically coated,
c) pressing the assembly of polymer electrolyte membrane fuel cell gas diffusion electrode (1, 1') and membrane (5) at a pressure of up to 500 bar and a temperature of up to 250 °C.

## Revendications

1. Electrode à diffusion de gaz (1, 1') pour piles à combustible à membrane électrolytique en polymère, qui est électriquement conductrice, hydrophobe et perméable aux gaz, caractérisée en ce qu'elle contient au moins un non-tissé (3, 3') de fibres de carbone, constitué de fibres carbonisées avec une masse spécifique par unité de surface pouvant aller jusqu'à 60 g/m², qui est imprégné de suie et de polytétrafluoréthylène, de manière sensiblement homogène, et qui, à l'état imprégné, est fritté à une température d'au moins 300 °C.

2. Electrode à diffusion de gaz (1, 1') pour piles à combustible à membrane électrolytique en polymère selon la revendication 1, caractérisée en ce qu'elle contient de 1 à 4 non-tissés de fibres de carbone.

3. Electrode à diffusion de gaz (1, 1') pour piles à combustible à membrane électrolytique en polymère selon la revendication 1 ou 2, caractérisée en ce qu'elle présente une couche (4, 4') active catalytiquement.

4. Electrode à diffusion de gaz (1, 1') pour piles à combustible à membrane électrolytique en polymère selon la revendication 3, caractérisée en ce que la couche (4, 4') active catalytiquement comporte une matière électriquement conductrice et une matière conductrice d'ions, la concentration en matière électriquement conductrice perpendiculairement à la couche diminuant lorsque augmente la distance par rapport au non-tissé de fibres de carbone et la concentration en matière conductrice d'ions augmentant.

5. Electrode à diffusion de gaz (1, 1') pour piles à combustible à membrane électrolytique en polymère selon la revendication 3 ou 4, caractérisée en ce que la couche (4, 4') active catalytiquement comporte au moins un catalyseur à métal précieux sur un support de carbone et au moins un polymère conducteur d'ions.

6. Electrode à diffusion de gaz (1, 1') pour piles à combustible à membrane électrolytique en polymère selon l'une des revendications 1 à 5, caractérisée en ce qu'elle est renforcée par une grille (2, 2') conductrice.

7. Electrode à diffusion de gaz (1, 1') pour piles à combustible à membrane électrolytique en polymère selon la revendication 6, caractérisée en ce que la grille (2, 2') est un tissu à mailles carrées de nickel avec une ouverture des mailles de 0,4 à 0,8 mm et une épaisseur des fils de 0,12 à 0,28 mm.

8. Ensemble membrane-électrode (6, 6') comportant une membrane électrolytique (5) en polymère, au moins une électrode à diffusion de gaz (1; 1') et une couche (4 ; 4') active catalytiquement prévue entre elles, caractérisé en ce que l'électrode à diffusion de gaz est au moins une électrode à diffusion de gaz (1, 1') pour piles à combustible à membrane électrolytique en polymère, selon l'une des revendications 1 à 7.

9. Pile à combustible (8) à membrane électrolytique en polymère avec une anode (1), une cathode (1'), une membrane électrolytique (5) en polymère disposée entre l'anode et la cathode, caractérisée en ce qu'au moins l'une des électrodes (1, 1') est réalisée sous la forme d'une électrode à diffusion de gaz pour piles à combustible à membrane électrolytique en polymère selon l'une des revendications 1 à 7.

10. Procédé de fabrication d'une électrode (1, 1') à diffusion de gaz pour piles à combustible à membrane électrolytique en polymère selon l'une des revendications pour une pile à combustible (8) à membrane électrolytique en polymère comportant les étapes suivantes :
a) réaliser une suspension de suie et d'au moins un liquide,
b) préparer une suspension de polytétrafluoréthylène et d'au moins un liquide,
c) mélanger intensivement les suspensions préparées à l'étape a) et l'étape b),
d) imprégner de manière sensiblement homogène un non-tissé de fibres de carbone carbonisé d'une masse spécifique par unité de surface pouvant aller jusqu'à 60 g/m², avec le mélange réalisé au cours de l'étape c),
e) sécher le non-tissé de fibres de carbone imprégné,
f) fritter le non-tissé de fibres de carbone imprégné à une température d'au moins 300 °C.

11. Procédé selon la revendication 10, caractérisé en ce que les étapes d) et e) sont renouvelées une ou plusieurs fois.

12. Procédé selon la revendication 10 ou 11, caractérisé en ce qu'au moins un non-tissé de fibres de carbone fritté est pressé sous une pression pouvant aller jusqu'à 500 bars et une température pouvant aller jusqu'à 400 °C.

13. Procédé selon l'une des revendications 10 à 12, caractérisé en ce que le séchage du non-tissé de fibres de carbone imprégné s'effectue à une température supérieure à la température ambiante.

14. Procédé selon l'une des revendications 10 à 13, caractérisé en ce qu'on ajoute à la suspension de suie et d'au moins un liquide un agent destiné à abaisser la tension superficielle.

15. Procédé selon l'une des revendications 10 à 14, caractérisé en ce que le polytétrafluoréthylène et la suie sont utilisés dans un rapport en masse allant de 1 à 10 à 1 à 1.

16. Procédé pour recouvrir la surface d'une électrode (1, 1') à diffusion de gaz d'une couche active catalytiquement, l'application du revêtement présentant les étapes suivantes :
a) mélange intensif du catalyseur à métal précieux sur un support de carbone avec polymère conducteur d'ions dissous ou en suspension,
b) application de la suspension réalisée au cours de l'étape a) sur une surface de l'électrode (1, 1') à diffusion de gaz,
c) séchage de la couche appliquée,
caractérisé en ce qu'on utilise comme électrode (1, 1') à diffusion de gaz une électrode à diffusion de gaz pour piles à combustible à membrane électrolytique en polymère selon la revendication 1 ou 2.

17. Procédé selon la revendication 16, caractérisé en ce qu'avant d'appliquer la suspension réalisée au cours de l'étape a), on dilue une partie du liquide en suspension.

18. Procédé selon la revendication 16 ou 17, caractérisé en ce que les étapes b) et c) sont renouvelées une ou plusieurs fois.

19. Procédé selon la revendication 18, caractérisé en ce qu'on utilise des suspensions de concentration différente en catalyseur à métal précieux sur un support de carbone et polymère conducteur d'ions.

20. Procédé de fabrication d'un ensemble membrane-électrode (6, 6') présentant les étapes suivantes :
a) préparation d'une membrane électrolytique (5) en polymère sous forme H⁺ avec ou sans revêtement actif catalytiquement,
b) mise en place d'une électrode à diffusion de gaz pour piles à combustible à membrane électrolytique en polymère selon la revendication 1 ou 2 sur l'une ou les deux faces de la membrane électrolytique (5) en polymère, lorsque cette dernière présente un revêtement catalytique ou mise en place d'une électrode (1, 1') à diffusion de gaz pour piles à combustible à membrane électrolytique en polymère selon l'une des revendications 3 à 5 sur une l'une ou les deux faces de la membrane électrolytique (5) en polymère lorsque cette dernière ne présente pas de revêtement catalytique,
c) pressage du dispositif constitué de l'électrode (1, 1') à diffusion de gaz et de la membrane (5) dans une pression pouvant aller jusqu'à 500 bars et une température pouvant aller jusqu'à 250 °C.
